(19) 

Europäisches
Patentamt
European
Patent Office
Office européen
des brevets

(11)  EP 2 421 134 A1

(12)  **EUROPEAN PATENT APPLICATION**

(43) Date of publication:
    **22.02.2012 Bulletin 2012/08**

(51) Int Cl.:
    **H02M 3/155** (2006.01)

(21) Application number: **10173166.9**

(22) Date of filing: **18.08.2010**

(84) Designated Contracting States:
    **AL AT BE BG CH CY CZ DE DK EE ES FI FR GB
    GR HR HU IE IS IT LI LT LU LV MC MK MT NL NO
    PL PT RO SE SI SK SM TR**
    Designated Extension States:
    **BA ME RS**

(71) Applicant: **ABB Oy**
    **00380 Helsinki (FI)**

(72) Inventor: **Suntio, Teuvo**
    **37120, Nokia (FI)**

(74) Representative: **Valkeiskangas, Tapio Lassi
    Paavali
    Kolster Oy Ab
    Iso Roobertinkatu 23
    P.O. Box 148
    00121 Helsinki (FI)**

(54)  **Current-fed quadratic buck converter**

(57)    The present invention provides a current-fed quadratic buck converter topology. A current-fed converter can, in principle, operate within a full range from short-circuit conditions to open-circuit conditions. Its input voltage can also be controlled. The quadratic behaviour allows conversion ratios which are larger than those with a conventional converter.

Harmful converter internal resonances typical of current-fed converters can be reduced by using a control method according to the present invention.

Figure 1

EP 2 421 134 A1

**Description**

FIELD OF THE INVENTION

The present invention relates to switching converters, and particularly to converters interfacing solar generators.

BACKGROUND OF THE INVENTION

The new forms of power generation and storage have also introduced a need for ways to interface with them. Power may have to be converted into a more usable form. Solar power generation is an example of this.

A solar panel is typically an array of series/parallel-connected solar cells. The voltage produced by it is typically too low to be used directly in an application for supplying electricity to the grid. On the other hand, the voltage may be too high to be fed directly to a battery or array of batteries. In addition to his, the power output of a solar panel depends greatly on the lighting conditions. Therefore, the output power of a solar panel may rapidly fluctuate considerably.

A conventional way to interface with solar panels is to use a voltage-fed switching converter. The converter converts the voltage produced by the solar panels into another voltage which is more suitable for the application.

A disadvantage associated with the above arrangement is that it has a limited operational range. The application may have to operate under conditions where a great operational range is required.

BRIEF DESCRIPTION OF THE INVENTION

An object of the present invention is to provide a method and an apparatus so as to overcome the above problem. The object of the invention is achieved by a method and an apparatus which are characterized by what is stated in the independent claims. Preferred embodiments of the invention are disclosed in the dependent claims.

The invention is based on the idea of using a current-fed quadratic buck converter topology. A current-fed converter can, in principle, operate within a full range from short-circuit conditions to open-circuit conditions. Its input voltage can also be controlled. The quadratic behaviour allows conversion ratios which are larger than those with a conventional converter.

Harmful converter internal resonances typical of current-fed converters can be reduced by using a control method according to the present invention.

BRIEF DESCRIPTION OF THE DRAWINGS

In the following, the invention will be described in greater detail by means of preferred embodiments with reference to the accompanying drawings, in which

Figure 1 illustrates a switching converter according to the present invention;
Figure 2 illustrates polarities of relevant currents and voltages;
Figure 3 illustrates an on-time equivalent circuit structure of the converter according to the present invention;
Figure 4 illustrates an off-time equivalent circuit structure of the converter according to the present invention;
Figure 5 illustrates approximate waveforms of capacitor voltages and inductor currents;
Figure 6 illustrates an embodiment of the present invention, and
Figure 7 illustrates a pulse width generation procedure.

DETAILED DESCRIPTION OF THE INVENTION

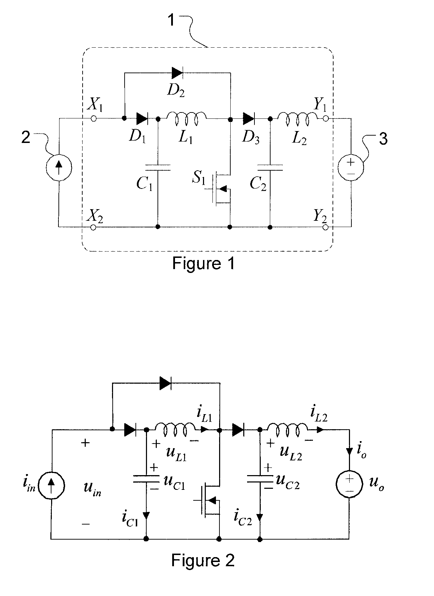

Figure 1 illustrates a current-fed quadratic buck converter 1 according to the present invention. A current-fed converter can, in principle, operate within a whole range of a UI curve of a current source from short-circuit to open-circuit condition, and its input voltage can be readily controlled. The quadratic behaviour between input and output in regard of a duty cycle allows conversion ratios which a larger than those with a conventional converter.

The converter 1 comprises a first input terminal $X_1$ and a second input terminal $X_2$. The converter 1 is adapted to be connected to a current source 2. In Figure 1, the input terminals $X_1$ and $X_2$ are adapted to be connected to the current source 2. However, in some embodiments, the converter may comprise an EMI filter between the current source 2 and the input terminals $X_1$ and $X_2$. The current source 2 may for instance be a solar generator or a superconducting magnetic energy storage (SMES).

The converter 1 also comprises a first output terminal $Y_1$ and a second output terminal $Y_2$. The output terminals $Y_1$ and $Y_2$ are adapted to be connected to a load 3. The second output terminal $Y_2$ is connected to the second input terminal $X_2$. The load may, for instance, be a high voltage DC bus of a frequency converter.

The converter 1 further comprises a first inductor $L_1$ with two terminals and a first rectifier device $D_1$ which is connected between the first input terminal $X_1$ and the first inductor $L_1$ first terminal, thus allowing a flow of current from the first input terminal $X_1$ to the first inductor $L_1$ first terminal. The rectifying device in this document may for instance be a diode, as in Figure 1.

A second rectifier device $D_2$ is connected between the first input terminal $X_1$ and the first inductor $L_1$ second terminal, thus allowing a flow of current from the first input terminal $X_1$ to the first inductor $L_1$ second terminal.

A first capacitor $C_1$ is connected between the first inductor $L_1$ first terminal and the second input terminal $X_2$.

The converter 1 also comprises a switching device $S_1$ connected between the first inductor $L_1$ second terminal and the second input terminal $X_2$ and adapted to be able to set the connection between the first inductor $L_1$ second terminal and the second input terminal $X_2$ to a conducting and a non-conducting state. The switching device may, for instance, be a power MOSFET or an IGBT.

A second inductor $L_2$ with two terminals is connected from its second terminal to the first output terminal $Y_1$. A third rectifier device $D_3$ is connected between the first inductor $L_1$ second terminal and the second inductor $L_2$ first terminal, thus allowing a flow of current from the first inductor $L_1$ second terminal to the second inductor $L_2$ first terminal. A second capacitor $C_2$ is connected between the first terminal of the second inductor $L_2$ and the second input terminal $X_2$.

The converter 1 also comprises means for controlling, on the basis of a control signal, a voltage between the converter inputs adapted to be connected to the current source 2.

The current-fed quadratic buck converter shown in Figure 1 and provided with an input EMI filter has such a steady-state conversion ratio $M(D)$ that an average input current $I_{in}$ is reflected to an average output current $I_o$ multiplied by the square of a duty ratio (i.e. $M(D) = D^2$) and the output voltage $U_o$ to the input $U_{in}$ with the same conversion ratio.

A power stage of the current-fed quadratic buck converter is shown in Figure 2 with polarities of relevant currents and voltages. The converter has two operational states: an on-time state and an off-time state.

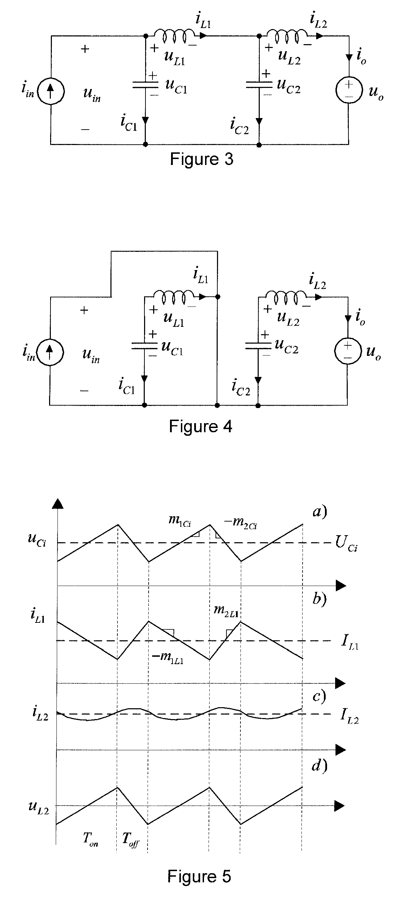

During the on-time state, the controlled switching device $S_1$ and the rectifying device $D_2$ are non-conducting and the rectifying devices $D_1$ and $D_3$ are conducting, yielding an on-time circuit structure illustrated in Figure 3.

During the off-time state, the controlled switch $S_1$ and the diode $D_2$ are conducting and the diodes $D_1$ and $D_3$ are non-conducting, yielding an off-time circuit structure given in Figure 4.

By applying Kirchhoff's laws to the on-time equivalent circuit in Figure 3, the following set of equations can be formed:

$$\begin{aligned}
u_{L1} &= u_{C1} - u_{C2} \\
u_{L2} &= u_{C2} - u_o \\
i_{C1} &= i_{in} - i_{L1} \\
i_{C2} &= i_{L1} - i_{L2} \\
u_{in} &= u_{C1} \\
i_o &= i_{L2}.
\end{aligned} \qquad (1)$$

In a similar manner, a set of equations can be formed using the off-time equivalent circuit in Figure 4:

$$\begin{aligned}
u_{L1} &= u_{C1} \\
u_{L2} &= u_{C2} - u_o \\
i_{C1} &= -i_{L1} \\
i_{C2} &= -i_{L2} \\
u_{in} &= 0 \\
i_o &= i_{L2}.
\end{aligned} \qquad (2)$$

According to (1) and (2), average voltages across the inductors, average currents through the capacitors as well as average output current and input voltage are given as

$$\langle u_{L1} \rangle = \langle u_{C1} \rangle - d \langle u_{C2} \rangle$$
$$\langle u_{L2} \rangle = \langle u_{C2} \rangle - \langle u_o \rangle$$
$$\langle i_{C1} \rangle = d \langle i_{in} \rangle - \langle i_{L1} \rangle \qquad (3)$$
$$\langle i_{C2} \rangle = d \langle i_{L1} \rangle - \langle i_{L2} \rangle$$
$$\langle u_{in} \rangle = d \langle u_{C1} \rangle$$
$$\langle i_o \rangle = \langle i_{L2} \rangle$$

where angle brackets $\langle \rangle$ denote an average over time and d denotes a duty ratio.

In order to maintain flux linkage and charge balances, the average voltages across the inductors and the average currents through the capacitors have to be zero. According to these principles operating-point-related steady-state variables are given as

$$U_{C1} = DU_o$$
$$U_{C2} = U_o$$
$$I_{L1} = DI_{in}$$
$$I_{L2} = D^2 I_{in} \qquad (4)$$
$$I_o = D^2 I_{in}$$
$$U_{in} = D^2 U_o$$

which indicate that input-to-output and output-to-input relations are quadratic functions of the duty ratio D. The switching frequency of the converter is assumed to be $f_s$ and, consequently, the cycle time $T_s = 1/f_s$. The duty cycle $D = T_{on} / T_s$ and therefore, the length of on-time $T_{on} = DT_s$ and the length of off-time $T_{off} = (1-D)T_s$, because $T_s = T_{on} + T_{off}$.

Figure 5 illustrates approximate waveforms of the capacitor voltages and inductor currents. The average voltages $U_x$ and currents $I_x$ are represented by dashed lines, and the instantaneous voltages $u_x$ and currents $i_x$ are represented by solid lines. The approximate waveforms of the capacitor voltages are shown in Figure 5 as a curve $a$. The on-time and off-time slopes of the waveform are denoted by $m_{1Ci}$ and $—m_{2Ci}$. They can be given for the capacitor $C_1$ by

$$m_{1C1} = (1-D)I_{in} / C_1 ,$$

$$m_{2C1} = DI_{in} / C_1 \qquad (5)$$

as well as for the capacitor $C_2$ by

$$m_{1C2} = D(1-D)I_{in} / C_2 ,$$
$$m_{2C2} = D^2 I_{in} / C_2 . \qquad (6)$$

According to the slopes defined in (5) and (6), peak-to-peak ripples associated with the capacitors can be determined by

$$\Delta U_{Ci-pp} = m_{1Ci} DT_s . \tag{7}$$

The average voltages $U_{Ci}$ are defined in (4). The selection of the capacitors can be carried out according to the defined peak-to-peak ripple and average voltages.

The approximate waveform of the current of inductor $L_1$ is shown in Figure 5 as a curve b where the on-time and off-time slopes of the waveform are denoted by $—m_{1L1}$ and $m_{2L1}$. They can be given by

$$m_{1L1} = (1-D)U_o / L_1 ,$$
$$m_{2L1} = DU_o / L_1 . \tag{8}$$

The corresponding peak-to-peak ripple current can be given by

$$\Delta i_{L1-pp} = m_{1L1} DT_s , \tag{9}$$

and the corresponding average current $I_{L1}$ is defined in (4). The selection of the inductor $L_1$ can be carried out based on the defined ripple and average currents.

The approximate waveform of the current of inductor $L_2$ is shown in Figure 5 as the curve c. The voltage appearing across the inductor $L_2$, illustrated in Figure 5 as the curve d, is the same as the ripple voltage of the capacitor $C_2$ which is specified in (7). The corresponding average current $I_{L2}$ is defined in (4). The ripple current $i_{L2}$ of the inductor $L_2$ is small and can be usually neglected when sizing the inductor. The peak-to-peak ripple current can be given by

$$\Delta i_{L2-pp} = m_{1C2} DT_s^2 /(8L_2) \tag{10}$$

based on the change in the flux linkage of the inductor. The selection of the inductor can be based on the ripple and average currents.

The input voltage of the converter is pulsating and, therefore, an EMI filter may be needed for producing the average voltage ($\approx D^2 U_0$) at its input, as shown in Figure 1. For instance, in order to get the maximum power out of a solar generator, the voltage at its output has to stay constant at the maximum power point (MPP).

When controlling the input voltage in current-fed converters, the converter internal resonances tend to reduce the achievable control bandwidth of the input-voltage feedback loop and, as a consequence, the transient response can be unacceptably slow.

The resonances can be reduced by applying a control method according to the present invention. An internal feedback loop from a converter capacitor voltage or a sum of capacitor voltages of a converter according to the present invention, provided with an averaging controller (typically a proportional-integral controller), is added to the control signal of pulse width modulation generation. In other words, the control signal and a feedback signal from a voltage over a capacitor of the switching converter are used for determining an average term. The average term is then added to the control signal, and the resulting signal is used for controllinh the switching devices. This control method is in this document called Average-Voltage-Mode Control (AVMC).

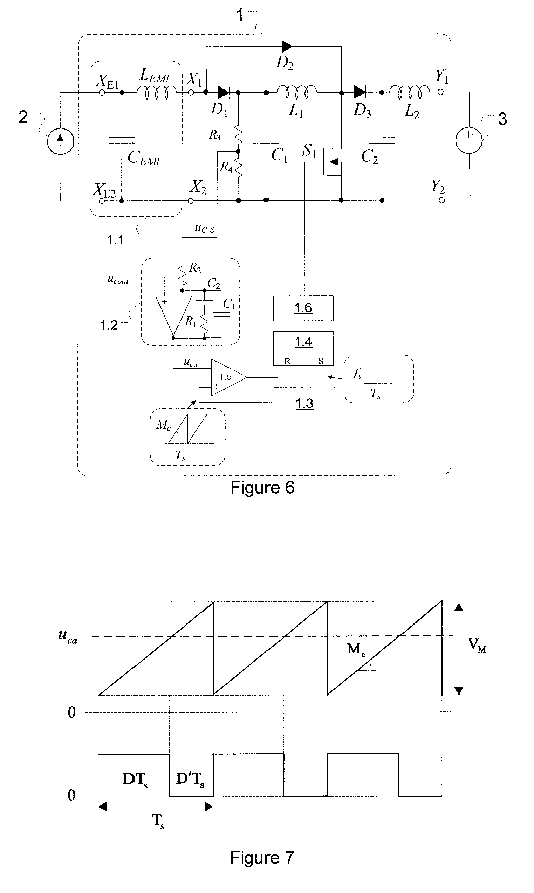

Figure 6 illustrates an embodiment of the present invention in association with a solar generator. The converter 1 is connected to the solar generator 2 and a DC load 3. The converter comprises an EMI filter 1.1. The EMI filter 1.1 has two inputs $X_{E1}$ and $X_{E2}$ and two outputs. The EMI filter inputs $X_{E1}$ and $X_{E2}$ are adapted to be connected to the current source 2. The EMI filter first output is connected to the first input terminal $X_1$ and the EMI filter second output is connected to the second input terminal $X_2$. In Figure 6 the EMI filter 1.1 comprises an inductor $L_{EMI}$ and a capacitor $C_{EMI}$. The inductor is connected between the EMI first input $X_{E1}$ and the EMI first output. The capacitor is connected between the EMI filter outputs.

The converter 1 comprises means for controlling, on the basis of a control signal, a voltage between inputs adapted to be connected to the current source 2. In Figure 6, these inputs are the EMI filter inputs $X_{E1}$ and $X_E$. The solar-generator 2 voltage can be controlled, for instance for locating an operation point of the solar generator at its maximum power point (MPP).

A Maximum Power Point Tracker (MPPT) method for locating the operation point of the solar generator at its MPP measures the input current $i_{in}$ and the input voltage $u_{in}$. The MPPT method then determines a voltage reference for the input voltage $u_{in}$ on the basis of the input current $i_{in}$ and provides a control signal $u_{cont}$ to be used for adjusting the input voltage $u_{in}$ to correspond to the voltage reference. The MPPT method is not discussed in detail in this document.

The AVMC method embodiment in Figure 6 comprises means for generating pulse width modulation on the basis of a control signal $u_{cont}$. These means comprise an internal feedback loop from a voltage over a capacitor of the switching converter, producing a feedback signal $u_{C\text{-}S}$ and an averaging controller 1.2 providing an internal control signal $u_{ca}$. The controller acts as means for determining an average term on the basis of the control signal $u_{cont}$ and the feedback signal $u_{C\text{-}S}$, and means for adding the average term to the control signal $u_{cont}$, thus producing an internal control signal $u_{ca}$.

The embodiment also comprises means 1.3, 1.4, and 1.5 for controlling the switching devices on the basis of the internal control signal $u_{ca}$.

The time base 1.3 provides a pulse signal and a PWM ramp signal which is synchronized with the pulse signal. The pulse signal is fed to a Set-input (S) of an SR-flip-flop 1.4. The PWM ramp signal is compared with the internal control signal $u_{ca}$ with comparator a 1.5. The result of the compare operation is fed to a Reset-input (R) of the SR-flip-flop 1.4.

As a result of the input signals, the (non-inverted) output of the SR-flip-flop 1.4 is at a high state when the value of the control signal $u_{ca}$ exceeds the PWM ramp value. When the PWM ramp value exceeds the value of the control signal $u_{ca}$, the (non-inverted) output of the SR-flip-flop 1.4 enters a low state. The output of the SR-flip-flop 1.4 is then fed to a gate driver 1.6 which converts the signal to a suitable level for controlling the switching device $S_1$.

A pulse width generation procedure is shown in Figure 7 where a slope $M_c$ of the PWM ramp signal equals $V_M / T_s$, the output of the internal voltage-loop controller $u_{ca}$ equals

$$ u_{ca} = u_{co} + G_{ca}(u_{co} - u_{C-S}), \qquad (11) $$

where $G_{ca}$ is a controller transfer function of the controller 1.2. The duty ratio is denoted with D and its complement with $D'$. The feedback signal $u_{C\text{-}S}$ can be the voltage of some capacitor of the converter, as in Figure 6, or the voltage of the sum of capacitors. In this embodiment the feedback signal $u_{C\text{-}S} = k \cdot U_{C1}$, where k is a scaling factor, $k = R_4 / (R_3 + R_4)$ in this particular case.

The description of the method is given here in analog domain but it can be implemented equally in digital domain, applying the stated principles.

It will be obvious to a person skilled in the art that the inventive concept can be implemented in various ways. For instance, the converter according to the present invention may be used with a superconducting magnetic energy storage as the current source. The invention and its embodiments are not limited to the examples described above but may vary within the scope of the claims.

**Claims**

1.  A switching converter (1), **characterized** that the converter (1) is adapted to be connected to a current source (2) and that the converter (1) comprises
    a first input terminal ($X_1$) and a second input terminal ($X_2$),
    a first output terminal ($Y_1$) adapted to be connected to a load (3),
    a second output terminal ($Y_2$) connected to the second input terminal ($X_2$) and adapted to be connected to a load (3),
    a first inductor ($L_1$) with two terminals,
    a first rectifier device ($D_1$) connected between the first input terminal ($X_1$) and the first inductor ($L_1$) first terminal, thus allowing a flow of current from the first input terminal ($X_1$) to the first inductor ($L_1$) first terminal,
    a second rectifier device ($D_2$) connected between the first input terminal ($X_1$) and the first inductor ($L_1$) second terminal, thus allowing a flow of current from the first input terminal ($X_1$) to the first inductor ($L_1$) second terminal,
    a first capacitor ($C_1$) connected between the first inductor ($L_1$) first terminal and the second input terminal ($X_2$),
    a switching device ($S_1$) connected between the first inductor ($L_1$) second terminal and the second input terminal ($X_2$) and adapted to be able to set the connection between the first inductor ($L_1$) second terminal and the second input terminal ($X_2$) to a conducting and a non-conducting state,
    a second inductor ($L_2$) with two terminals, connected from its second terminal to the first output terminal ($Y_1$),
    a third rectifier device ($D_3$) connected between the first inductor ($L_1$) second terminal and the second inductor ($L_2$) first terminal, thus allowing a flow of current from the first inductor ($L_1$) second terminal to the second inductor ($L_2$)

first terminal,
a second capacitor ($C_2$) connected between the first terminal of the second inductor ($L_2$) and the second input terminal ($X_2$), and
means for controlling, on the basis of a control signal, a voltage between inputs adapted to be connected to the current source (2).

2. A switching converter (1) according to claim 1, **characterized in that** the first input terminal ($X_1$) and the second input terminal ($X_2$) are adapted to be connected to a current source (2).

3. A switching converter (1) according to claim 1, **characterized in that** the converter (1) comprises an EMI filter with two inputs ($X_{E1}$, $X_{E2}$) and two outputs, wherein the EMI filter inputs ($X_{E1}$, $X_{E2}$) are adapted to be connected to a current source (2) and the EMI filter first output is connected to the first input terminal ($X_1$) and the EMI filter second output is connected to the second input terminal ($X_2$).

4. A switching converter (1) according to claim 3, **characterized in that** the current source (2) is a solar generator.

5. A switching converter (1) as claimed in any one of claims 1 to 4, **characterized in that** the load (3) is essentially a DC bus.

6. A switching converter (1) as claimed in any one of claims 1 to 5, **characterized in that** the switching controller comprises means for generating pulse width modulation on the basis of a control signal ($u_{co}$), where the means for generating pulse width modulation comprise
an internal feedback loop from a voltage over a capacitor or a sum of capacitors of the switching converter, producing a feedback signal ($u_{C-S}$),
means for determining an average term on the basis of the control signal ($u_{co}$) and the feedback signal ($u_{C-S}$),
means for adding the average term to the control signal, thus producing an internal control signal ($u_{ca}$), and
means for controlling the switching devices on the basis of the internal control signal ($u_{ca}$).

7. A switching converter (1) as claimed in any one of claims 1 to 6, **characterized in that** the means for controlling the voltage between the input terminals operate on the basis of a control signal provided by an MPPT method.

8. A method of generating pulse width modulation on the basis of a control signal ($u_{co}$) in a switching converter (1) as claimed in any one of claims 1 to 5, **characterized in that** the method comprises steps of
determining a value for a feedback signal ($u_{C-S}$) by using an internal feedback loop from a voltage over a capacitor or a sum of capacitors of the switching converter,
determining an average term on the basis of the control signal ($u_{co}$) and the feedback signal ($u_{C-S}$),
adding the average term to the control signal, thus producing an internal control signal ($u_{ca}$) and
controlling the switching devices on the basis of the internal control signal ($u_{ca}$).

9. A method as claimed in claim 8, **characterized in that** a value of the control signal ($u_{co}$) is determined by an MPPT method.

Figure 1

Figure 2

Figure 3

Figure 4

Figure 5

Figure 6

Figure 7

Europäisches
Patentamt

European
Patent Office

Office européen
des brevets

## EUROPÄISCHER RECHERCHENBERICHT

Nummer der Anmeldung

EP 10 17 3166

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| Y | MOSCHOPOULOS G: "Quadratic power conversion for industrial applications" APPLIED POWER ELECTRONICS CONFERENCE AND EXPOSITION (APEC), 2010 TWENTY-FIFTH ANNUAL IEEE, IEEE, PISCATAWAY, NJ, USA, 21. Februar 2010 (2010-02-21), Seiten 1320-1327, XP031649600 ISBN: 978-1-4244-4782-4 Sections: I. INTRODUCTION, III. ALTERNATIVE ENERGY POWER SYSTEMS;* Abbildung 1(b) * ----- | 1-9 | INV. H02M3/155 |
| Y | CUK S: "General topological properties of switching structures" PESC'79. IEEE POWER ELECTRONICS SPECIALISTS CONFERENCE,, 1. Januar 1980 (1980-01-01), Seiten 109-130, XP009144093 * das ganze Dokument * ----- | 1-9 | |
| Y | DORON SHMILOVITZ: "Application of duality for derivation of current converter topologies" HAIT JOURNAL OF SCIENCE AND ENGINEERING B, Bd. 2, 2005, Seiten 529-557, XP002620436 Israel * Seiten 529-540 * ----- -/-- | 1-9 | RECHERCHIERTE SACHGEBIETE (IPC) H02M |

Der vorliegende Recherchenbericht wurde für alle Patentansprüche erstellt

| Recherchenort | Abschlußdatum der Recherche | Prüfer |
|---|---|---|
| München | 14. Februar 2011 | Hanisch, Thomas |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.......................................................................................
& : Mitglied der gleichen Patentfamilie, übereinstimmendes
    Dokument

EPO FORM 1503 03.82 (P04C03)

| | Europäisches Patentamt<br>European Patent Office<br>Office européen des brevets | **EUROPÄISCHER RECHERCHENBERICHT** | **Nummer der Anmeldung**<br>EP 10 17 3166 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | JORGE ALBERTO MORALES-SALDANA ET AL: "Average Current-Mode Control Scheme for a Quadratic Buck Converter With a Single Switch"<br>IEEE TRANSACTIONS ON POWER ELECTRONICS, IEEE SERVICE CENTER, PISCATAWAY, NJ, US, Bd. 23, Nr. 1,<br>1. Januar 2008 (2008-01-01), Seiten 485-490, XP011198323<br>ISSN: 0885-8993 DOI: DOI:10.1109/TPEL.2007.910907<br>* das ganze Dokument *<br>----- | 6,8 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 14. Februar 2011 | Hanisch, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)